# EUROPEAN PATENT APPLICATION

(11) **EP 1 433 991 A1**
(43) Date of publication of application: **30.06.2004**
(21) Application number: 03029853.3
(22) Date of filing: 24.12.2003
(51) Int. Cl.: F16L 31/00

(54) **Piping joint structure for joining a resin tube and a rubber hose**

(30) Priority: 27.12.2002 JP 2002382627
(71) Applicant: Tokai Rubber Industries, Ltd., Komaki-shi, Aichi-ken, 485-8550 (JP)
(72) Inventor: Katayama, Kazutaka, Kasugai-shi Aichi-ken 486-0801 (JP); Takahiro, Nishiyama, Kasugai-shi Aichi-ken 486-0903 (JP); Murakami, Koyo, Nagoya-shi Aichi-ken 464-0038 (JP)
(74) Representative: VOSSIUS & PARTNER

(57) **Abstract**

An adapter (1) is configured so as to include a cylindrical body (3). The cylindrical body (3) of the adapter (1) is formed with a tube connecting portion (7) on one axial side thereof and a hose connecting portion (9) on an opposite axial side thereof. A resin tube (37) is connected to the tube connecting portion (7). A rubber hose (45) is fitted on the hose connecting portion (9) of the first adapter (1) so as to overlap a connecting end portion of the first resin tube (37). A tightening band (55) is tightened around an outer periphery of the rubber hose (45) on the tube connecting portion (7).

## Description

The present invention relates to a piping joint structure for joining a resin tube and a rubber hose, for example, to be adapted in assembly in a piping for vehicle, a domestic hot water piping or a typical industrial piping.

In a piping for vehicle such as radiator piping or heater piping, a rubber hose is typically used. As a rubber hose has sufficient elasticy, it can follow relative displacement between components caused by vibration during driving, for example, relative displacement between an engine and a radiator. And, application of a rubber hose allows to determine relatively flexibly a location layout of components such as an engine or a radiator.

However, if a piping arrangement is constructed entirely with rubber hose, as weight of a rubber hose is heavy, resulting that handleability of piping member is lowered in piping operation. Therefore, a corrugated tube is also applied in piping for vehicle as piping member. Such a corrugated tube is formed on a peripheral wall of a resin tube with corrugation providing the resin tube with sufficient elasticy. The corrugated tube is light-weight sufficiently compared to a rubber hose, and application of the corrugated tube improves handleability in piping operation. However, if the corrugated tube is adapted to a piping such as radiator piping for vehicle where high pressure fluid flows therein, a corrugated portion of the corrugated tube is possibly largely dent or bent and deformed. Under the circumstances, the Patent Document 1 discloses a corrugated tube with a structure wherein a corrugated portion is hardly deformed even at high pressure.

The Patent Document 1 discloses the corrugated tube with corrugated portion including hills of elliptical or oval shape in cross-section. The corrugated portion is configured such that an axis of the hills of the elliptical or oval shape in cross-section is changed properly in a circumferential direction or in circumferential topology, for example, one after another. This configuration provides the corrugated tube with relatively good distortion resistance at high-pressure or relatively good anti-deformation properties at high temperature and high pressure. However, as this corrugated portion might be deformed according to weight of internal fluid therein, such configuration may be applicable only to relatively short part of a piping. And, as understood from a corrugated tube where bend is preformed (for example, refer to Patent Documents 2 and 3), the corrugated tube is flexible, but not as flexible enough as a rubber hose. Such insufficient flexibility of the corrugated tube not seldom limits flexible location layout of components for vehicle. Especially, if the corrugated tube is made of materials with high rigidity or formed thick in wall-thickness so that the corrugated portion is not easily deformed even at high pressure, flexible location layout of components is extremely restrained. Further, in case that the corrugated tube is adapted for connecting components such as a engine and a radiator, a connector is separately required for connection. And, as the connector should be provided with complicate structure such as anti-rotation structure while a pipe formed on the engine and the radiator also should be provided with specific configuration such as anti-escaping design, production cost will be increased. On the other hand, there is known such technique that a connector is formed integrally on an end of a corrugated tube by extrusion or overinjection (refer to Patent Documents 4 and 5). Here, in order to bond a connector to a corrugated tube with sufficient adhesion strength, the connector should be made of the same kind of material as the corrugated tube, and is preferably formed so as to bond also with an end surface of the corrugated tube. However, in many cases, a corrugated tube has multi-layer construction including layers of different function, these layers of different function are respectively exposed at an end surface of the corrugated tube. Therefore, there is fear that the connector does not bond with an entire end surface of the corrugated tube, and the connector is broken or cracks at a position of the end surface of the corrugated tube. For example, in case that the corrugated tube is formed of outer layer made of Nylon 12 (PA12) of heat resistant property and inner layer made of polypropylene (PP), polyolefin or fluorine resin with internal fluid-resistant property, while the connector is made of glass fiber reinforced Nylon 12 (PA12GF), the connector may not bond sufficiently with inner layer of the corrugated tube.

Then, such piping structure is adapted that opposite sides of a piping is constructed with rubber hoses respectively, and a resin tube is disposed between the rubber hoses. Such piping structure may decrease weight of piping members compared to piping structure constructed only with rubber hose, and improve flexibility of location layout of components, vibration absorbency and low-temperature resistance compared to piping structure constructed only with corrugated tube. According to the circumstances, the resin tube is formed in straight-walled shape or shape including a corrugated portion or corrugated wall portion . The resin tube of straight-walled shape increases reliability under use at high temperature and high pressure. Even the resin tube including a corrugated portion also increases reliability under use at high temperature and high pressure, as the resin tube or corrugated-wall portion is relatively short. Furthermore, no connector is required to join the resin tube and a pipe, and thereby piping cost may be lowered.

In this configuration, piping joint structure should be constructed to join a rubber hose and a resin tube. As for such piping joint structure, it is applicable that a rubber hose is fitted on an outer periphery of an end portion of a resin tube, and then a clamp is tighten on an outer periphery of the rubber hose. However, sufficiently strong tightening force of the clamp cannot be secured if the resin tube has relatively large diameter. Therefore, such piping joint structure often cannot secure sufficient sealing property between the resin tube and the rubber hose. Alternatively, it also seems available that a cylindrical adapter, which has a tube connecting portion on one axial side of the adapter and a hose connecting portion on an opposite axial side thereof. Here, the resin tube is tightly fitted on the tube connecting portion, the rubber hose is fitted on the hose connecting portion, and the clamp is tighten around an outer periphery of the rubber hose. However, there is fear under use at high temperature and high pressure that a sealing property is deteriorated between the resin rube and the tube connecting portion of the adapter due to creep of the resin tube at high temperature, and high pressure fluid leaks out. In order to secure sufficient sealing property between the resin tube and the tube connecting portion of the adapter, the clamp may be tighten on an outer periphery of the resin tube. However, as the tube connecting portion is provided, for example, with stop ribs, the resin tube possibly cracks if the clamp is tighten directly thereon.

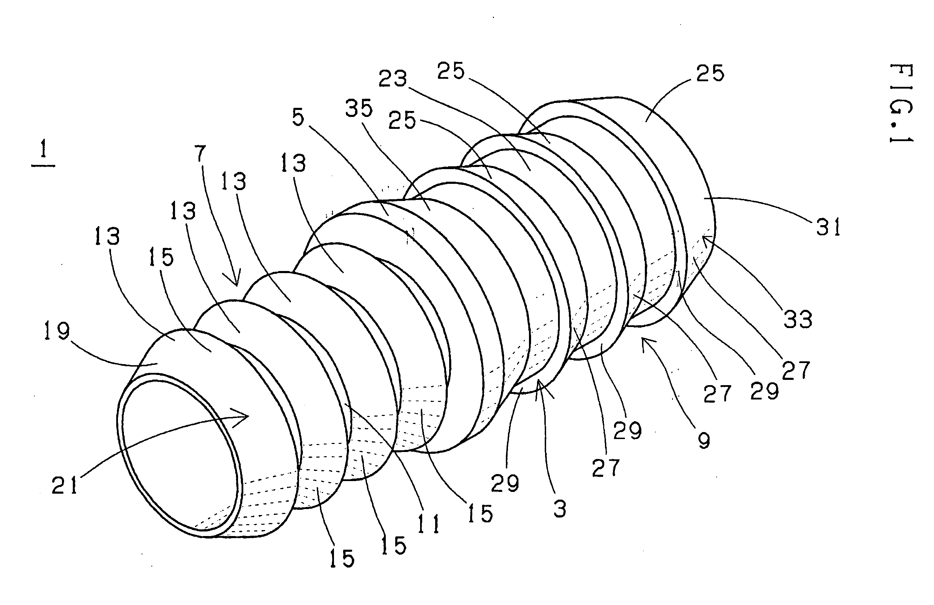

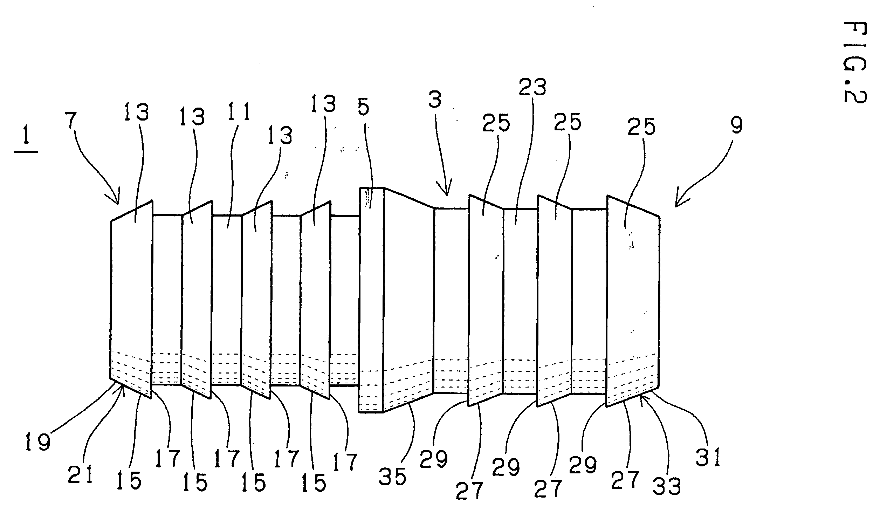

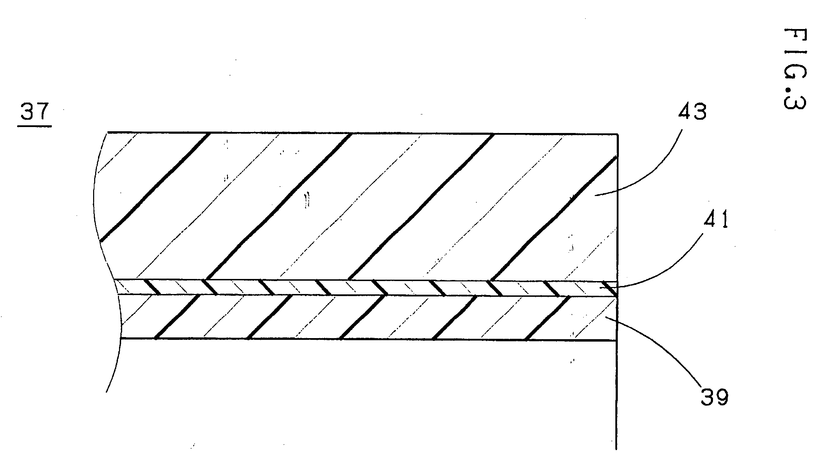

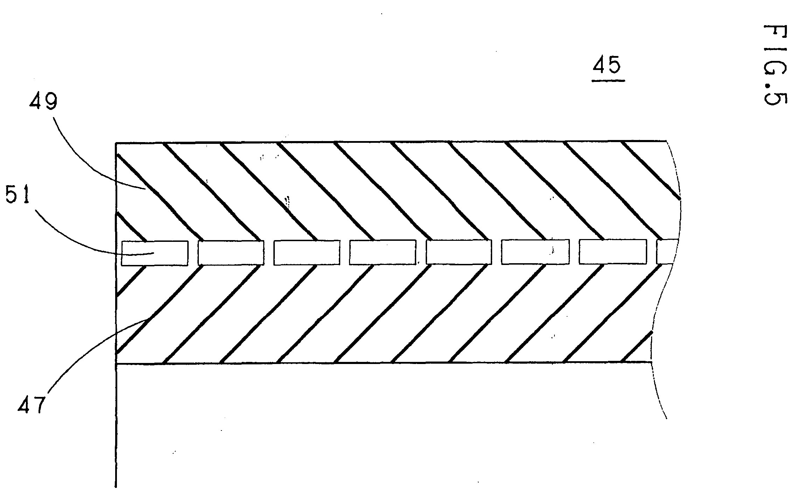

In this connection, it is considered that resin covering layer is formed to cover a resin tube and a rubber hose which are connected with an adapter (refer to Patent Document 6, although the subject matter is not to join a resin tube and a rubber hose).
1. JP, A, 11-280961 (Fig. 2)
2. EP,1108523, A1 (Fig. 16)
3. US, 6447709, B1 (Fig. 1A, Fig. 2)
4. JP, A, 2001-277305 (Fig. 5)
5. JP, A, 2001-343092 (Fig. 3)
6. JP, A, 5-60279 (Fig. 1)

However, as resin covering layer is formed after a resin tube and a rubber hose is connected to an adapter, assembly process becomes complicated in such piping joint structure.

Accordingly, it is an object of the present invention to provide a piping joint structure for joining a resin tube and a rubber hose which can be constructed easily while securing sufficient sealing property constantly.

In order to achieve a foregoing object, there is provided a novel piping joint structure for joining a resin tube and a rubber hose.

A piping joint structure for joining a resin tube and a rubber hose comprises a cylindrical adapter provided with a tube connecting portion on one axial side of the adapter (on one side axially of the adapter) and a hose connecting portion on an opposite axial side thereof (on an opposite side axially of the adapter). And, a resin tube and a rubber hose are connected to the adapter respectively. The resin tube has a connecting end portion which is fitted on an outer periphery of the tube connecting portion of the adapter. The rubber hose has a fit-on end portion which is fitted on an outer periphery of the hose connecting portion. The fit-on end portion of the rubber hose extends beyond the hose connecting portion toward or to the tube connecting portion so as to overlap the connecting end portion of the resin tube and tighten the connecting end portion. The resin tube, for example, has rigidity at least to some extent. The rubber hose (namely elastomer hose) is made of rubber elastic material, namely vulcanized rubber or thermoplastic elastomer with sufficient heat resistance, and therefore has property which hardly eases tightening stress even at high temperature. And, as the connecting end portion of the resin tube is tightened by the rubber hose which is diametrically enlarged, it is prevented that the connecting end portion of the resin tube creeps under use at high temperature and tightening stress in the connecting end portion is so eased as to make sealing property insufficient. If the rubber hose is configured to provide sufficient tightening force, the tightening force allows the connecting end portion of the resin tube to conform to a hill-and-valley shaped surface of the tube connecting portion of the adapter when the connecting end portion thereof is soften under use at high temperature. After all, it may occur that the use at high temperature increases close contact relation between the connecting end portion of the resin tube and the tube connecting portion of the adapter.

A piping joint structure for joining a resin tube and a rubber hose according to the present invention may be constructed to further comprise a tube-side clamp which is mounted on an outer periphery of the fit-on end portion of the rubber hose to tighten or clamp the fit-on end portion and the connecting end portion of the resin tube onto the tube connecting portion of the adapter. Here, as the connecting end portion of the resin tube is tightened by the tube-side clamp, it is prevented that the connecting end portion of the resin tube creeps under use at high temperature and tightening stress in the connecting end portion is so eased as to make sealing property insufficient. Here, the fit-on end portion of the rubber hose does not need to be configured to exert tightening force on the connecting end portion of the resin tube by its own diametrically contracting force. If the tube-side clamp is configured to provide sufficient tightening force or to provide sufficient tightening force onto the connecting end portion of the resin tube, the connecting end portion of the resin tube conforms to a hill-and-valley shaped surface of the tube connecting portion of the adapter under tightening force of the tube-side clamp or tightening force thereof onto the connecting end portion of the resin tube when the connecting end portion of the resin tube is soften during use at high temperature. After all, it may occur that the use at high temperature increases bonding relation between the connecting end portion of the resin tube and the tube connecting portion of the adapter. And, as the tube-side clamp tightens the connecting end portion of the resin tube via the rubber hose, the connecting end portion thereof is never damaged by the tube-side clamp. Here, the rubber hose itself may be also configured to be diametrically enlarged to exert tightening force onto the resin tube.

Meanwhile, the tube connecting portion of the adapter typically has a lead-in slant surface of tapered shape on one axial end portion thereof. Here, as one axial end of the lead-in slant surface has an outer diameter slightly larger than, or generally equal to an inner diameter of the connecting end portion of the resin tube, the connecting end portion of the resin tube substantially begins to diametrically enlarge at a position of one axial end of the tube connecting portion (at a position corresponding to one axial end thereof) and consequently is tightly fitted thereon. Accordingly, elasticy is largely different between portions of the resin tube before and beyond a position of one axial end of the tube connecting portion. Therefore, when the resin tube is subject to vibration or displaced relatively with respect to the adapter, displacement or stress is concentrated in the resin tube at a position of one axial end of the adapter. Consequently, there is fear that the resin tube is worn or cracked at a position thereof by friction with the tube connecting portion. Further, as the resin tube is in thin-walled state at a position of one axial end of the tube connecting portion due to diametrical enlargement, the resin tube at a position of one axial end of the tube connecting portion is most vulnerable to scratch or breakage. Then, it is advantageous to configure the fit-on end portion of the rubber hose to extend somewhat toward one axial direction beyond one axial end of the adapter. This configuration allows the resin tube to be pressed against one axial end of the rubber hose when the resin tube is subject to vibration or is displaced relatively with respect to the adapter, and as a result prevents displacement or stress concentration on or in a position of one axial end of the tube connecting portion. It is effective that the fit-on end of the rubber hose contacts with or is pressed against an outer peripheral surface of a portion of the resin tube which slightly diametrically enlarges at a position slightly toward one axial direction beyond one axial end of the tube connecting portion. Here, terms "beyond" and "before" are used on the bases of a direction a rubber hose advancing when fitted on an adapter.

In order to enhance sealing property between the rubber hose and the adapter, a hose-side clamp is preferably mounted on an outer periphery of the fit-on end portion of the rubber hose to clamp or tighten the fit-on end portion onto the hose connecting portion of the adapter.

Piping joint structure for joining a resin tube and a rubber hose according to the present invention enables to join a resin tube and a rubber hose easily while a stable sealing property is maintained therebetween.

Now, the preferred embodiments of the present invention will be described in detail with reference to the drawings.

### BRIEF DESCRIPTION OF THE DRAWINGS

Fig. 1 is a perspective view of a first adapter adapted in a first piping joint structure for joining a resin tube and a rubber hose according to the present invention.

Fig. 2 is a front view of the first adapter.

Fig. 3 is a sectional view of multi-layer construction of a first resin tube to be connected to the first adapter.

Fig. 4 is a perspective view explaining a process to join the first resin tube and a rubber hose via the first adapter and showing a state that the first resin tube is connected to a tube connecting portion of the first adapter.

Fig. 5 is a sectional view of multi-layer construction of the rubber hose which is connected to the first adapter.

Fig. 6 is a perspective view explaining a process to join the first resin tube and the rubber hose via the first adapter and showing a state that the rubber hose is fitted on the first adapter.

Fig. 7 is a perspective view explaining a process to join the first resin tube and the rubber hose via the first adapter and showing a state that tightening bands are tightened around an outer periphery of the rubber hose in the first piping joint structure for joining a resin tube and a rubber hose.

Fig. 8 is a sectional view of the first piping joint structure for joining a resin tube and a rubber hose.

Fig. 9 is a sectional view of multi-layer construction of a second resin tube adapted in a second piping joint structure for joining a resin tube and a rubber hose according to the present invention.

Fig. 10 is a sectional view of the second piping joint structure for joining a resin tube and a rubber hose.

### DETAILED DESCRIPTION OF THE PREFERRED EMBODIMENTS

A first piping joint structure for joining a resin tube and a rubber hose according to the present invention is adapted for heater piping, radiator piping or air-intake piping for vehicle, or domestic hot water piping, and is used to join a resin tube and a rubber hose in such piping that a straight piping part is constructed with a straight resin tube and bent section, for example, opposite sides of the straight piping part is constructed with rubber hoses. The first piping joint structure may be adapted to join a resin tube and a rubber hose also in piping constructed with resin tube including a corrugated portion and rubber hoses connected to opposite sides thereof. A rubber hose of straight shape and a rubber hose including corrugated portion may be also applicable in the first piping joint structure. The first piping joint structure comprises a first adapter 1, as shown in Figs. 1 and 2, constructed with a cylindrical body 3 made of resin, with an inner diameter of 29mm or an axially through-bore of inner diameter of 29mm. The cylindrical body 3 is formed integrally with a plurality of annular stop ribs on an outer peripheral surface thereof. The cylindrical body 3 is also formed integrally with an annular parting rib 5 of 45mm in outer diameter with narrow width on an axial center portion of an outer peripheral surface thereof. The cylindrical body 3 includes a tube connecting portion 7 on one axial side of the parting rib 5, and a hose connecting portion 9 on an opposite axial side thereof.

The tube connecting portion 7 comprises a tube-side cylindrical body 11 having four annular tube-stop ribs 13 on an outer peripheral surface thereof axially and generally equally spaced relation with one another, from one axial end portion of the tube-side cylindrical body 11 toward an opposite axial direction. The tube-stop ribs 13 are identical or generally identical in shape each other. A distance between the tube-stop rib 13 on the most opposite axial side and the parting rib 5 is designed generally equal to that between the adjacent tube-stop ribs 13. Each of the tube-stop ribs 13 has an outer surface including a slant surface 15 diametrically enlarging from an outer peripheral surface of the tube-side cylindrical body 11 toward an opposite axial direction in tapered shape, and a radial surface 17 extending or expanding radially from an opposite axial end of the slant surface 15 to an outer peripheral surface of the tube-side cylindrical body 11. The slant surface 15 of the tube-stop rib 13 on one axial end portion of the tube-side cylindrical body 11 defines a lead-in slant surface 21 together with and continuous from an end slant surface 19 which is formed on one axial end of outer peripheral surface of the tube-side cylindrical body 11 so as to extend short in an opposite axial direction while diametrically enlarging at an angle equal to the slant surface 15 in tapered shape. Each of the tube-stop ribs 13 has a maximum outer diameter of 39mm on an opposite axial end of the slant surface 15.

An outer diameter of a hose-side cylindrical body 23 of the hose connecting portion 9 is designed slightly larger than that of the tube-side cylindrical body 11. The hose-side cylindrical body 23 is formed with three annular hose-stop ribs 25 on outer peripheral surface thereof axially and generally equally spaced relation with one another, from an opposite axial end portion of the hose-side cylindrical body 23 toward one axial direction. The hose-stop ribs 25 are identical or generally identical in shape each other. Each of the hose-stop ribs 25 has an outer surface including a slant surface 27 diametrically enlarging from an outer peripheral surface of the hose-side cylindrical body 23 toward one axial direction in tapered shape, and a radial surface 29 extending or expanding radially from one axial end of the slant surface 27 to an outer peripheral surface of the hose-side cylindrical body 23. The slant surface 27 of the hose-stop rib 25 on an opposite axial end portion of the hose-side cylindrical body 23 defines a lead-in slant surface 33 together with and continuous from an end slant surface 31 which is formed on an opposite axial end of outer peripheral surface of the hose-side cylindrical body 23 so as to extend short in one axial direction while diametrically enlarging at an angle equal to the slant surface 27 in tapered shape. Each of the hose-stop ribs 25 has a maximum outer diameter of 42mm on one axial end of the slant surface 27. And, an opposite axial side surface of the parting rib 5, namely a surface on a side of the hose connecting portion 9 defines a guideway slant surface 35 which extends and diametrically enlarges from an outer peripheral surface of the hose-side cylindrical body 23 toward one axial direction in tapered shape.

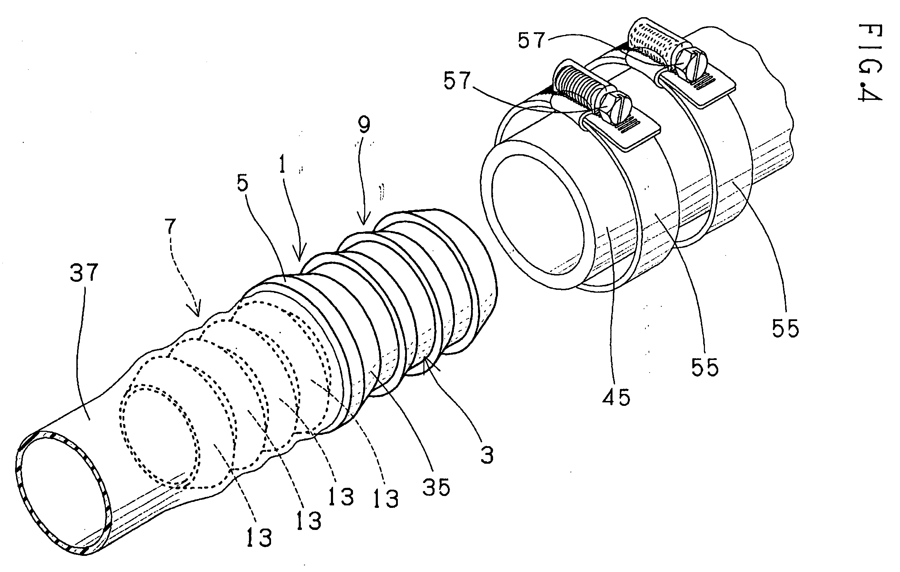

A first resin tube 37 to be connected to the first adapter 1 is sized 34.5mm in outer diameter and 1.4mm in wall-thickness, and has multi-layer construction as shown in Fig. 3 including an inner layer 39 made of polypropylene (PP) with 0.3mm thickness, a middle layer 41 made of acid modified PP with 0.1mm thickness and an outer layer 43 made of nylon 12 (PA12) with 1.0mm thickness. More specifically, the brand name MITSUI-SUMITOMO Polypro-FS2011C from Sumitomo Mitsui Polyolefin Company is used for the inner layer 39 as PP, the brand name ADMER QF500 from Mitsui Chemicals Inc. for the middle layer 41 as acid modified PP, and the brand name UBESTA3030B from Ube Industries, Ltd. for the outer layer 43 as PA12. As well shown in Fig. 4, the tube connecting portion 7 of the first adapter 1 is relatively force-fitted in a connecting end portion of the first resin tube 37 until one axial end surface of the parting rib 5, namely an end surface thereof toward the tube connecting portion 7 is abutted with the connecting end of the first resin tube 37. As a result, the first resin tube 37 is tightly fitted on an outer periphery of the tube connecting portion 7, and connected to the first adapter 1 while retained by the tube-stop ribs 13. An outer diameter of one axial end of the lead-in slant surface 21 of the tube connecting portion 7 is sized slightly larger than an inner diameter of the first resin tube 37, and a connecting end of the first resin tube 37 is widen, for example, just before insertion of the tube connecting portion 7 so as to receive one axial end of the lead-in slant surface 21. And, the first resin tube 37 diametrically slightly enlarges at a gentle angle from a position of one axial side beyond one axial end of the tube connecting portion 7 toward near one axial end of the tube connecting portion 7, and then substantially begins to diametrically enlarge at a larger or more acute angle from near one axial end of the tube connecting portion 7, namely from a position of one axial end of the tube connecting position 7 or from a position on an opposite axial side slightly before one axial end of the tube connecting portion 7.

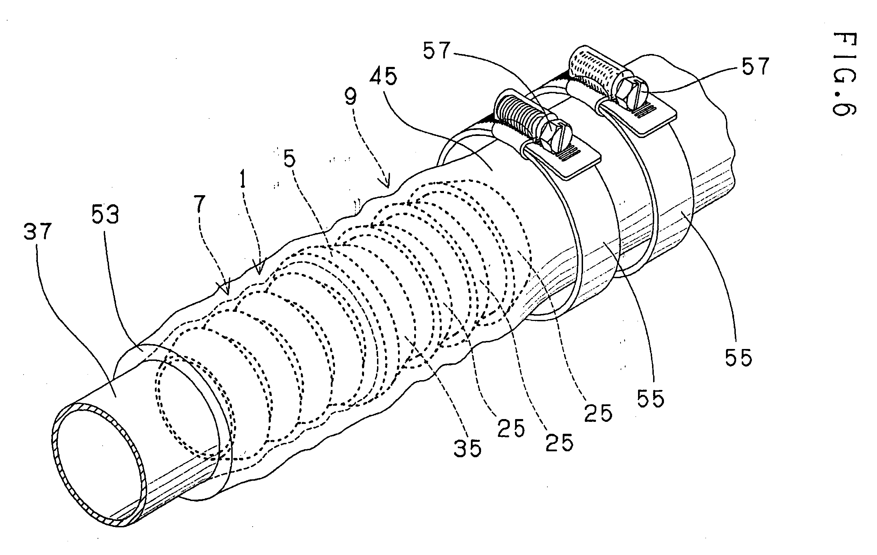

As well shown in Fig. 5, a rubber hose 45 to be connected to the first adapter 1 is sized 37.0mm in inner diameter and 5.0mm in wall-thickness, and has multi-layer construction including an inner layer 47 made of ethylene-propylene-diene copolymers (EPDM), an outer layer 49 made of EPDM and a yarn reinforcement layer 51 made of nylon 66 (PA66) disposed between the inner layer 47 and the outer layer 49. The inner and outer layers 47, 49 may be made of peroxide vulcanized rubber containing no metal oxide or other vulcanized rubber. As well shown in Fig. 4, the first adapter 1 is relatively inserted in a fit-on end portion of the rubber hose 45 from a side of the hose connecting portion 9 until the guideway slant surface 35 of the parting rib 5 is abutted with the fit-on end of the rubber hose 45. And, the first adapter 1 is further relatively inserted in the rubber hose 45 so that the adapter 1 entirely enters in the fit-on end portion of the rubber hose 45. Accordingly, as well shown in Fig. 6, the rubber hose 45 is fitted on an outer periphery of the hose connecting portion 9 of the first adapter 1 while tightening the hose connecting portion 9 or lightly tightening it and retained by the hose-stop ribs 25, and further overlaps the connecting end portion of the first resin tube 37 while diametrically enlarging. The rubber hose 45 is fitted on the first adapter 1 so as to overlap the range of the first resin tube 37 between the connecting end and a position slightly toward one axial side beyond one axial end of the first adapter 1 or the tube connecting portion 7. A fit-on end 53 of the rubber hose 45 contacts with an outer peripheral surface of the first resin tube 37 which diametrically slightly enlarges, on a position toward one axial side slightly beyond one axial end of the first adapter 1 or the tube connecting portion 7. Therefore, even if the first resin tube 37 is relatively displaced with respect to the first adapter 1, large bending stress or flexure stress is not caused in a portion where the first resin tube 37 substantially begins to diametrically enlarge (on a portion near one axial end of the first adapter 1, namely a substantially diametrically enlarging end portion). An opposite axial end of the lead-in slant surface 33 of the hose connecting portion 9 has an outer diameter equal to or slightly smaller than an inner diameter of the rubber hose 45.

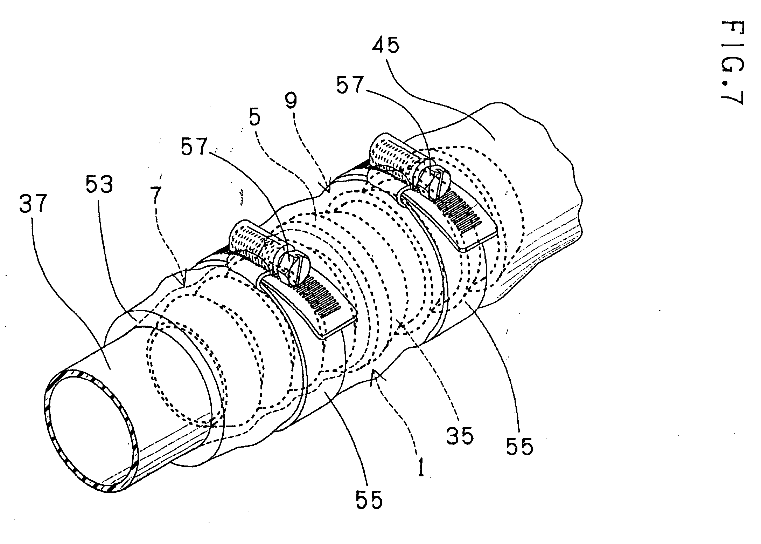

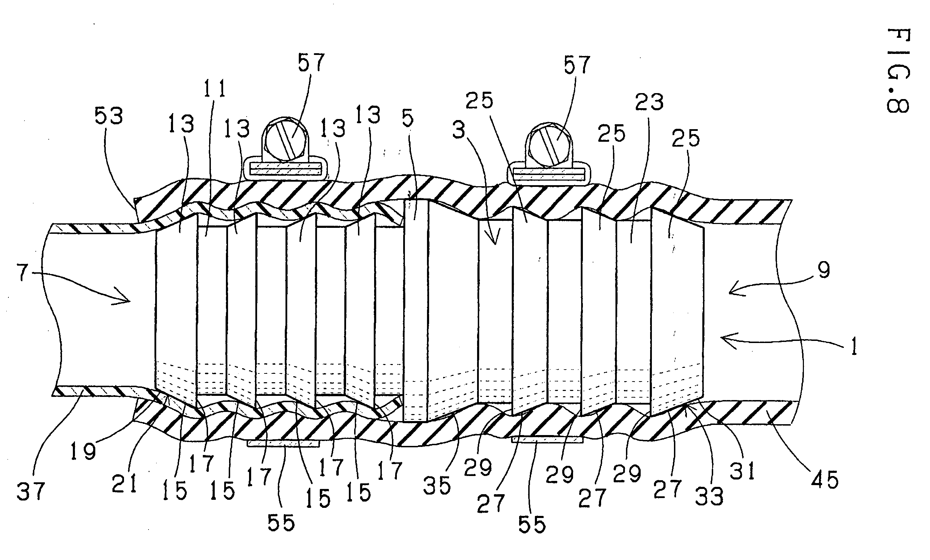

As well shown in Fig. 6, the rubber hose 45 is put on loosely with two tightening bands or clamps 55, 55 around an outer periphery thereof prior to being fitted on the hose connecting portion 9 of the first adapter 1. The rubber hose 45 is fitted on the first adapter 1, then one tightening band 55 (tube-side clamp) is tightened on an outer periphery of the rubber hose 45 on the tube connecting portion 7 so as to reduce diameter by screwing operation of the screw portion 57, and the other tightening band 55 (hose-side clamp) is tightened on an outer periphery of the rubber hose 45 on the hose connecting portion 9 so as to reduce diameter also by screwing operation of the screw portion 57. Then, as shown in Figs. 7 and 8, the rubber hose 45 is completely fitted on the hose connecting portion 9 or the first adapter 1. That is, the connecting end portion of the first resin tube 37 is tightened or fastened on an outer periphery of the tube connecting portion 7 by the one tightening band 55 via the rubber hose 45, and the fit-on end portion of the rubber hose 45 is tightened on the outer periphery of the hose connecting portion 9 by the other tightening band 55. Instead of the tightening band 55 of screw type, a tightening band of spring type which is low in price may be applicable.

The first adapter 1 may be made of resin or fiber reinforced resin with high Tg (glass transition point). And, in view of molding processability, glass fiber reinforced nylon such as 23wt% glass fiber reinforced nylon 12 (PA12GF23) and 30wt% glass fiber reinforced nylon 66 (PA66GF30) is preferably used. As understood from heat distortion temperature of various resin materials shown in Table 1 (Test Method: ASTM D648 1.85Mpa), heat distortion temperature of PA12GF23 (the trade name VESTAMID L1833 from Degussa) is 158°C and that of PA66GF30 (the trade name Ultramid A3W6G from BASF) is 248°C. Both has sufficient heat resistant property against temperature of internal fluid in a heater piping, a radiator piping and air intake piping for vehicle or domestic hot water piping. On the other hand, heat distortion temperature of poly phenylene ether/polypropylene resin (PPE/PP, the trade name LEMALLOY DX603 from Mitsubishi Engineering-Plastic Corporation) is 100°C, that of Nylon 11 (PA11, the trade name Rilsan BMN O TLD from ATOFINA) is 43°C, and that of PA66 (the trade name Zytel 101 from DUPONT) is 90°C. Those have the possibility that heat-distorts the first adapter 1 under tightening force of the rubber hose 45 or the tightening band 55 depending on temperature of the internal fluid. If the first adapter 1 is distorted by heat, there is fear that a sealing property is deteriorated between the first adapter 1 and the first resin tube 37 or the rubber hose 45 and internal fluid leaks out.

**Table 1**

| Name of Material | Heat Distortion Temperature (°C) |
|---|---|
| PA12GF23 (VESTAMID L1833) | 158 |
| PA66GF30 (Ultramid A3W6G) | 248 |
| PPE/PP (LEMALLOY PX603) | 100 |
| PA11 (Rilsan BMN O TLD) | 43 |
| PA66 (Zytel 101) | 90 |

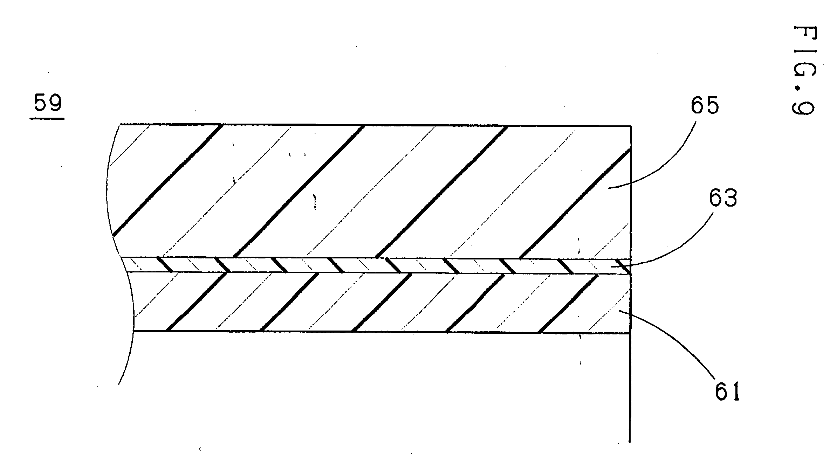

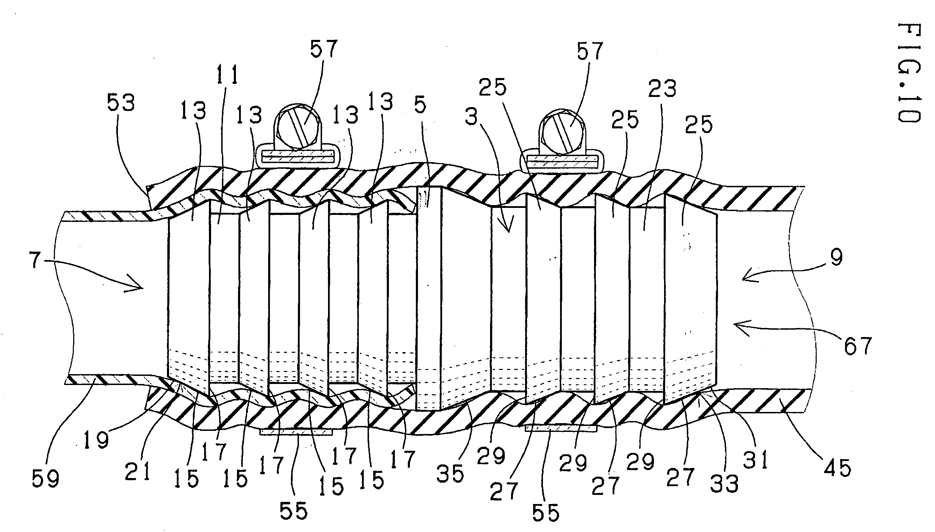

Figs 9 and 10 explain a second piping joint structure for joining a resin tube and a rubber hose according to the present invention. The second piping joint structure is constructed by modifying internal configuration of the first resin tube 37 of the first piping joint structure and material of the first adapter 1 of the first piping joint structure. The second piping joint structure is adapted to join a resin tube and a rubber hose in such piping for fuel cell cooling system or fuel cell pure water that a straight piping part is constructed with a straight resin tube and a bent section, for example, opposite sides of a straight piping part is constructed with rubber hoses. For example, the second piping joint structure may be adapted for piping such as for vehicle and for stationary arrangement of a home use fuel cell, attracting attention recently, which supplies electricity and hot water by use of hydrogen extracted from city gas at home. Further, the second piping joint structure may be adapted to join a resin tube and a rubber hose in a piping which is constructed by a resin tube including corrugated portion and rubber hoses connected to opposite ends of the resin tube. And both a rubber hose of straight wall shape and a rubber hose including corrugated portion are applicable. The second piping joint structure is the same as the first piping joint structure with regard to connecting and construction process and form factor. A second resin tube 59 to be used in the second piping joint structure is sized 34.5mm in outer diameter and 1.4mm in wall-thickness, and has multi-layer construction, as shown in Fig. 9, including an inner layer 61 made of polypropylene (PP) material of low extraction property of contaminant substance with 0.4mm thickness, a middle layer 63 made of acid modified PP with 0.1mm thickness and an outer layer 65 made of PA12 with 0.9mm thickness. More specifically, the trade name MITSUI-SUMITOMO Polypro-FS2011C from Sumitomo Mitsui Polyolefin Company is used for the inner layer 61 as PP material, the trade name ADMER QF500 from Mitsui Chemicals Inc. for the middle layer 63 as acid modified PP material, and the trade name UBESTA3030B from Ube Industries, Ltd. for the outer layer 65 as PA12 material. For example, peroxide vulcanized rubber containing no metal oxide which lowers dissolution of contaminant electrolysis material in pure water may be adapted for the inner and outer layers 47, 49 of EPDM of the rubber hose 45 used in the second piping joint structure.

The second adapter 67 to be adapted in the second piping joint structure has a form or configuration identical to the first adapter 1. The second adapter 67 is made of resin of low or no extraction property of contaminant substance with high Tg or material of low or no extraction property of contaminant substance with sufficient heat distortion temperature. The second adapter 67 may be made of metal with excellent corrosion resistance, for example, stainless steel such as SUS316L. Here, the second adapter 67 may be formed by cutting work of workpiece made of metal. Otherwise, the second adapter 67 may be made of resin with low or no extraction property of contaminant substance and excellent heat resistance, for example, cyclo olefin polymer or polyvinylidenfluorid (PVDF). As understood from heat distortion temperature of various materials shown in Table 2 (Test Method: ASTM D648 1.85Mpa), heat distortion temperature of cyclo olefin polymer (the trade name ZEONOR1600 from ZEON CORPORATION) is 161°C and that of PVDF (the trade name Solef1008 from Solvay) is 115°C. Both have sufficient heat resistant property against temperature of internal fluid in a piping for fuel cell cooling system and fuel cell pure water. And, the outer layer 65 made of PA12 of the second resin tube 59 have the possibility of extraction of contaminant substance such as oligomer and processing material when contacts with internal fluid. However, as a sufficient liquid-tight seal is provided between the connecting end portion of the second resin tube 59 and the tube connecting portion 7 of the second adapter 67, the connecting end or the connecting end surface of the second resin tube 59 does not contact with internal fluid and contaminant substance is not extracted from an end portion of the outer layer 65 made of PA12.

**Table 2**

| Name of Material | Heat Distortion Temperature (°C) |
|---|---|
| Cyclo olefin polymer (ZEONOR 1600) | 161 |
| PVDF (Solef1008) | 115 |

The piping joint structure of the present invention may be adapted for various piping systems by selecting materials for a rubber hose, a resin tube and an adapter taking account of resistance properties. For example, a piping joint structure is constructed by a rubber hose including inner layer made of fluorocarbon rubber with resistance to permeability, a fluorocarbon resin tube of single or multi-layer construction with resistance to permeability, and an adapter made of SUS. Such piping joint structure may be adapted for piping of compressed natural gas (NPG) for vehicle or liquefied petroleum gas (LPG) which is used at high temperature minimum 60°C and high pressure.

## Claims

1. A piping joint structure for joining a resin tube and a rubber hose, comprising:
a cylindrical adapter (1, 67) provided with a tube connecting portion (7) on one axial side thereof and a hose connecting portion (9) on an opposite axial side thereof,
a resin tube (37, 59) having a connecting end portion fitted on an outer periphery of the tube connecting portion (7) of the adapter (1, 67), and connected to the adapter (1, 67), and
a rubber hose (45) having a fit-on end portion fitted on an outer periphery of the hose connecting portion (9) of the adapter (1, 67), and connected to the adapter (1, 67), the fit-on end portion extending beyond the hose connecting portion (9) toward the tube connecting portion (7) so as to overlap the connecting end portion of the resin tube (37, 59) and tighten the connecting end portion thereof.

2. A piping joint structure for joining a resin tube and a rubber hose, comprising:
a cylindrical adapter (1, 67) provided with a tube connecting portion (7) on one axial side thereof and a hose connecting portion (9) on an opposite axial side thereof,
a resin tube (37, 59) having a connecting end portion fitted on an outer periphery of the tube connecting portion (7) of the adapter (1, 67), and connected to the adapter (1, 67),
a rubber hose (45) having a fit-on end portion fitted on an outer periphery of the hose connecting portion (9) of the adapter (1, 67), and connected to the adapter (1, 67), the fit-on end portion extending beyond the hose connecting portion (9) toward the tube connecting portion (7) so as to overlap the connecting end portion of the resin tube (37, 59), and
a tube-side clamp (55) mounted on an outer periphery of the fit-on end portion of the rubber hose (45) to tighten the fit-on end portion and the connecting end portion of the resin tube (37, 59) onto the tube connecting portion (7) of the adapter (1, 67).

3. The piping joint structure for joining a resin tube and a rubber hose as set forth in claim 1 or 2 wherein the fit-on end portion of the rubber hose (45) extends somewhat toward one axial direction beyond one axial end of the adapter (1, 67).

4. The piping joint structure for joining a resin tube and a rubber hose as set forth in any one of claims 1 to 3 further comprising:
a hose-side clamp (55) mounted on an outer periphery of the fit-on end portion of the rubber hose (45) to tighten the fit-on end portion onto the hose connecting portion (9) of the adapter (1, 67).
